# FASCICULE DE BREVET EUROPEEN

(11) **EP 0 642 950 B1**
(45) Date de publication et mention de la délivrance du brevet: **26.02.1997**
(21) Numéro de dépôt: 94402039.5
(22) Date de dépôt: 13.09.1994
(51) Int. Cl.: B60Q 1/115

(54) **Dispositif de commande automatique de l'orientation des projecteurs d'un véhicule automobile en fonction des variations d'assiette de celui-ci**
Automatische Scheinwerfereinstellung zur Korrektur des Einflusses der Neigungsveränderung des Lichtbündels relativ zur Strasse
Automatic headlight adjustment control by tilting, according to the position of the vehicle body relative to the ground

(30) Priorité: 15.09.1993 FR 9310978
(43) Date de publication de la demande: 15.03.1995
(73) Titulaire: VALEO VISION, 93000 Bobigny (FR)
(72) Inventeur: Leleve, Joel, F-93800 Epinay Sur Seine (FR)
(74) Mandataire: Martin, Jean-Jacques

(56) Documents cités:
- EP-A- 0 132 151
- EP-A- 0 186 571
- EP-A- 0 296 856
- EP-A- 0 533 508
- DE-A- 2 946 561

## Description

La présente invention concerne d'une façon générale un dispositif de correction automatique de l'orientation en site des projecteurs d'un véhicule automobile en fonction des variations d'assiette de celui-ci, correspondant au préambule de la revendication 1 (voir par exemple EP-A-0 186 571).

De façon classique en soi, l'assiette d'un véhicule automobile peut être détectée en utilisant des capteurs dans les régions avant et arrière du véhicule et en mesurant les variations de la distance verticale entre ces capteurs et la route. Les capteurs utilisés peuvent être par exemple à ultrasons ou optiques. On sait également prévoir en association avec les bras de suspension du véhicule des potentiomètres ou des capteurs de déplacement à noyau plongeur.

Les inconvénients de ces capteurs d'assiette connus résident principalement dans leur coût, dans leurs contraintes d'installation, notamment de montage et de câblage électrique sous la caisse du véhicule, dans la nécessité d'effectuer leur réglage, et enfin dans le fait que ces capteurs, exposés à un environnement mécaniquement très agressif, voient leur fiabilité et leur durée de vie réduites.

On connaît également dans la technique, notamment par le document EP-A-0 186 571, un dispositif correcteur de l'orientation en site des projecteurs d'un véhicule en fonction des variations d'assiette du véhicule dans lequel les variations d'assiette sont détectées par des moyens opto-électroniques et en particulier par une lunette de détection solidaire du miroir du projecteur et visant la route dans le champ d'éclairement du projecteur. Les variations de la luminance de la route renseignent sur les variations d'assiette du véhicule.

Ces dispositifs opto-électroniques présentent également des inconvénients. Tout d'abord, l'intégration des capteurs opto-électroniques dans le boîtier de projecteur en association avec le réflecteur impose une conception spécifique du projecteur. Ensuite, la luminance de la route est nécessairement détectée à travers la glace du projecteur, ce qui induit des perturbations dans la détection. De plus, l'environnement du capteur sur le plan thermique pose également des problèmes de conception, la température à l'intérieur d'un boîtier de projecteur pouvant atteindre 80°C ou davantage. Enfin, par nature et pour les raisons qui précèdent, les systèmes optoélectroniques sont relativement coûteux.

La présente invention vise à pallier ces inconvénients de la technique antérieure et à proposer un capteur d'assiette pour véhicule automobile qui soit facile à mettre en oeuvre et d'une bonne fiabilité, et qui évite le recours à une conception spécifique de certains éléments pré-existants du véhicule.

Ainsi la présente invention propose un dispositif de commande automatique de l'orientation des projecteurs d'un véhicule automobile en fonction des variations d'assiette de celui-ci, caractérisé en ce qu'il comprend :
une caméra vidéo visant vers l'avant du véhicule et dans le champ de laquelle les projecteurs d'éclairage du véhicule éclairent la route, et délivrant des signaux d'image contenant des informations de rétrodiffusion par la route de la lumière des projecteurs,
des moyens de traitement recevant lesdits signaux d'image et aptes à déterminer à partir desdites informations et d'informations de référence mémorisées les variations de l'orientation des faisceaux lumineux émis par les projecteurs par rapport à une orientation de référence, et à délivrer des signaux de commande à des moyens actuateurs pour amener l'orientation desdits faisceaux sur ladite orientation de référence.

Certains perfectionnements préférés du dispositif de l'invention sont les suivants :
- lesdits moyens de traitement prennent en compte une pluralité de points lumineux d'une même colonne de l'image vidéo;
- ladite colonne est disposée dans la région centrale de l'image vidéo;
- les moyens de traitement sont aptes à déterminer les pentes respectives de deux droites situées de part et d'autre d'un point de luminance maximale de ladite pluralité de points et représentatives de l'évolution de la luminance des points le long de la colonne respectivement au-dessus et au-dessous dudit point de luminance maximale;
- les moyens de détermination de pentes comprennent des moyens pour déterminer la position de deux points d'image appartenant à la colonne et présentant des luminances égales à des fractions prédéterminées de ladite luminance maximale;
- les moyens de traitement comprennent des moyens pour comparer les deux pentes déterminées à des pentes de référence;
- la caméra est située dans un plafonnier du véhicule.

D'autres aspects, buts et avantages de la présente invention apparaîtront mieux à la lecture de la description détaillée suivante de formes de réalisation préférées de celle-ci, donnée à titre d'exemple non limitatif et faite en référence au dessin annexé, sur lequel :
la figure 1 est une vue schématique d'un véhicule équipé d'un capteur d'assiette à caméra vidéo selon la présente invention,
la figure 2 illustre un exemple d'image obtenue avec la caméra de la figure 1, et
la figure 3 illustre sous forme graphique l'évolution d'une partie de l'image produite par la caméra en fonction de la hauteur dans l'image des points constituant ladite partie d'image, et ce pour différentes valeurs d'assiette du véhicule.

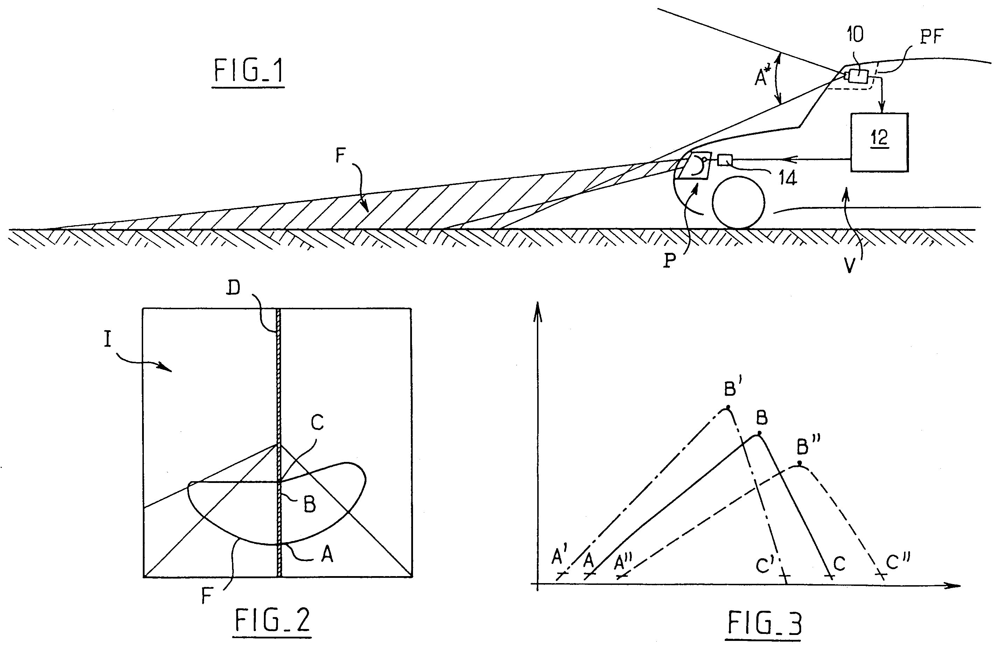

En référence tout d'abord à la figure 1, on a représenté un véhicule automobile V qui comprend, par exemple dans un plafonnier PF situé à proximité du bord supérieur du pare-brise, une caméra vidéo 10 visant en direction A* de la route en avant du véhicule. Il s'agit par exemple d'une caméra de type CCD (Charge Coupled Device).

Les signaux vidéo fournis par cette caméra sont appliqués à un circuit de traitement 12, qui peut être de type analogique ou numérique. Dans ce dernier cas, les signaux vidéo sont préalablement convertis en données numériques, de façon classique en soi. Le circuit de traitement 12 est conçu pour délivrer un signal de commande à une paire d'actuateurs électriques 14 montés sur des projecteurs associés P et permettant de faire varier l'orientation en site des faisceaux qu'ils émettent, par basculement des réflecteurs, de manière à adapter cette orientation aux variations d'assiette du véhicule.

De façon classique en soi, la caméra 10 délivre, à intervalles réguliers (par exemple à la cadence de 25 images/seconde), des trames d'image constituées d'informations de luminance (et de chrominance pour les caméras couleur) individuelles pour les points ou pixels d'une matrice de M lignes x N colonnes.

Selon une caractéristique de l'invention, le circuit de traitement 12 analyse la luminance en un certain nombre de points parmi les N points d'au moins une même colonne de l'image, pour déterminer à partir des valeurs de luminance recueillies une informations représentative de l'assiette du véhicule. De préférence, la colonne dans laquelle se situent ces points est située dans la région centrale de l'image.

On a représenté sur la figure 2 l'image I prise par la caméra. Le faisceau est indiqué en F, et la droite verticale des points à partir desquels travaille le circuit de traitement 12 est indiquée en D.

Etant donné la répartition lumineuse d'un faisceau de croisement, il existe un point B de luminance maximale, correspondant à la zone de la route que rencontre la tache centrale de concentration du faisceau. A partir de ce point B, la luminance diminue graduellement lorsqu'on s'éloigne du véhicule (vers le haut de l'image), et diminue aussi graduellement lorsque l'on se rapproche du véhicule (vers le bas de l'image).

Ainsi, les variations de luminance selon la colonne de points peuvent être modélisées, pour une assiette et une inclinaison de projecteurs données, par une première droite inclinée AB et par une seconde droite BC d'inclinaison inverse. Le point A est le point, situé en-dessous du point B, pour lequel la luminance dépasse un certain seuil, égal par exemple à une fraction de la luminance mesurée au point B. Le point C est le point, situé au-dessus du point B, pour lequel la luminance devient inférieure à un certain seuil, lui aussi égal à une fraction déterminée de la luminance mesurée au point B. Ce deuxième seuil peut être identique au premier seuil ou différent de celui-ci.

La modélisation précitée est illustrée sur la figure 3, sur laquelle l'abcisse représente la position du point de la colonne d'analyse D et l'ordonnée représente la luminance reçue en chacun des points.

Lorsque l'assiette du véhicule varie, la distance entre le point de la route que rencontre la tache de concentration maximale du faisceau et le véhicule varie. La première conséquence est que la luminance du point B de luminance maximale va varier. Ainsi un relèvement des projecteurs et de la caméra induit une diminution de la luminance maximale.

Dans une forme de réalisation de base de la présente invention, le circuit de traitement 12 élabore une information d'assiette sur la seule base des variations de la luminance dans la colonne D. Ainsi on établit par exemple le rapport ou la différence entre la luminance maximale au point B et la luminance en un ou plusieurs autres points situés dans la colonne de points D. Le résultat de ce(s) calcul(s) est comparé à une ou plusieurs valeurs de référence pour commander l'orientation des faisceaux des projecteurs par l'intermédiaire des actuateurs 14.

Dans ce cas, le circuit de traitement 12 comprend des moyens, par exemple à microprocesseur, pour effectuer les calculs précités, et des moyens de comparaison avec la ou les valeurs de référence, mémorisées. La sortie des moyens de comparaison est utilisée pour commander les actuateurs 14.

Dans une variante de réalisation de l'invention, on se base sur les variations de pente des droites AB et BC pour déterminer les variations d'assiette du véhicule.

Plus précisément, on a représenté sur la figure 3, outre les points A, B, C et les droites AB, BC correspondant à l'image I de la figure 2, deux autres jeux de points, respectivement A', B', C' et A'', B'', C'', correspondant à deux autres positions d'assiette du véhicule, à savoir une assiette plus plongeante et une assiette plus cabrée, respectivement.

On observe que, comme indiqué plus haut, la luminance maximale au point B a varié en fonction de l'assiette, pour être plus élevée en B' et plus faible en B''. On observe également que les positions des points B, B' et B'' (mais également des points A, A', A'' et C, C', C'', respectivement) a varié.

On observe surtout que les pentes des droites A'B' et A''B'' sont sensiblement différentes de la pente de la droite AB. De même, les pentes des droites B'C' et B''C'' sont sensiblement différentes de la pente de la droite BC. Ceci est du au fait que, la position relative de la route ayant varié dans le champ de la caméra 10, les lois de décroissance de la lumière rétrodiffusée en fonction de la distance ont également varié.

Ainsi le circuit de traitement 12 comprend avantageusement des moyens pour déterminer le point B de luminance maximale, identifié par sa position dans la colonne D, des moyens pour comparer la luminance d'au moins un certain nombre d'autres points de la colonne D avec le ou des seuils égaux à des fractions de la luminance maximale instantanée, de manière à déterminer les points A et C identifiés par leur position dans la colonne, et enfin des moyens pour, à partir de ces données, déterminer les pentes des droites AB et BC.

Les valeurs des pentes des droites AB et BC sont ensuite comparées à des valeurs de référence.

Dans le cas où le véhicule a plongé, les pentes des droites A'B' et B'C' ont augmenté toutes les deux. Les actuateurs 14 sont alors commandés pour relever les faisceaux émis par les projecteurs P.

Inversement, dans le cas où le véhicule s'est cabré, ces pentes ont toutes les deux diminué (pentes des droites A''B'' et B''C''), et les actuateurs 14 sont alors commandés pour relever les faisceaux des projecteurs.

Bien entendu, les fonctions indiquées ci-dessus pour le circuit de traitement ne sont que des possibilités parmi d'autres. Ainsi on peut prévoir que le circuit 12 analyse les points d'une pluralité de colonnes des images vidéo produites, ou fasse des calculs plus complexes basés sur les luminances de points séparés de distances bien déterminées.

De façon avantageuse, l'image vidéo nécessaire à la mise en oeuvre de la présente invention peut être celle engendrée, de façon classique en soi, par un système d'aide à la vision ou de détection d'obstacles, basé sur la détection d'un rayonnement infrarouge. A cet égard, on observera que le dispositif de la présente invention peut être mis en oeuvre aussi bien à partir de la lumière visible que des composantes infrarouges émises par les projecteurs.

On notera par ailleurs que la caméra peut être placée en tout endroit approprié dans le véhicule. On peut par exemple l'installer à proximité des projecteurs du véhicule, voire l'intégrer à l'un des projecteurs.

Par ailleurs, pour éviter les défauts de fonctionnement dûs notamment à des accélérations au freinages violents du véhicule, induisant respectivement un cabrage et une plongée prononcés de celui-ci, on peut associer au dispositif de la présente invention des moyens détecteurs d'accélération/freinage pour mettre temporairement le dispositif correcteur hors fonction dans de telles situations.

Bien entendu, la présente invention n'est nullement limitée aux formes de réalisation décrites ci-dessus, mais l'homme de l'art saura y apporter toute variante ou modification comprise dans la portée des revendications annexées.

## Revendications

1. Dispositif de commande automatique de l'orientation des projecteurs (P) d'un véhicule automobile (V) en fonction des variations d'assiette de celui-ci, caractérisé en ce qu'il comprend :
une caméra vidéo (10) visant vers l'avant du véhicule (V) et dans le champ de laquelle les projecteurs (P) d'éclairage du véhicule éclairent la route, et délivrant des signaux d'image contenant des informations de rétrodiffusion par la route de la lumière des projecteurs,
des moyens de traitement (12) recevant lesdits signaux d'image et aptes à déterminer à partir desdites informations et d'informations de référence mémorisées les variations de l'orientation des faisceaux lumineux émis par les projecteurs par rapport à une orientation de référence, et à délivrer des signaux de commande à des moyens actuateurs (14) pour amener l'orientation desdits faisceaux sur ladite orientation de référence.

2. Dispositif selon la revendication 1, caractérisé en ce que lesdits moyens de traitement (12) prennent en compte une pluralité de points lumineux (A, B, C) d'une même colonne (D) de l'image vidéo (I).

3. Dispositif selon la revendication 2, caractérisé en ce que ladite colonne (D) est disposée dans la région centrale de l'image vidéo.

4. Dispositif selon l'une des revendications 2 et 3, caractérisé en ce que les moyens de traitement (12) sont aptes à déterminer les pentes respectives de deux droites (AB, BC) situées de part et d'autre d'un point (B) de luminance maximale et représentatives de l'évolution de la luminance des points le long de la colonne (D) respectivement au-dessus et au-dessous dudit point de luminance maximale.

5. Dispositif selon la revendication 4, caractérisé en ce que les moyens de détermination de pentes comprennent des moyens (12) pour déterminer la position de deux points d'image appartenant à la colonne (D) et présentant des luminances égales à des fractions prédéterminées de ladite luminance maximale.

6. Dispositif selon la revendication 4 ou 5, caractérisé en ce que les moyens de traitement (12) comprennent des moyens pour comparer les deux pentes déterminées à des pentes de référence.

7. Dispositif selon l'une des revendications 1 à 6, caractérisé en ce que la caméra (10) est située dans un plafonnier (PF) du véhicule.

## Claims

1. Device for automatically controlling the orientation of the headlamps (P) of a motor vehicle (V) according to the trim variations of the latter, characterised in that it comprises:
a video camera (10) aimed towards the front of the vehicle (V) and in the field of which the illuminating headlamps (P) of the vehicle illuminate the road, and delivering image signals containing information on the backscattering of the light from the headlamps by the road,
processing means (12) receiving the said image signals and suitable for determining, from the said information and from stored reference information, the variations in orientation of the light beams emitted by the headlamps compared with a reference orientation, and delivering control signals to actuating means (14) in order to bring the orientation of the said headlamps onto the said reference orientation.

2. Device according to Claim 1, characterised in that the said processing means (12) take into account a plurality of light points (A, B, C) on one and the same column (D) on the video image (I).

3. Device according to Claim 2, characterised in that the said column (D) is disposed in the central region of the video image.

4. Device according to one of Claims 2 and 3, characterised in that the processing means (12) are suitable for determining the respective slopes of two straight lines (AB, BC) situated on each side of a point (B) of maximum luminance and representing the change in luminance of the points along the column (D) respectively above and below the said point of maximum luminance.

5. Device according to Claim 4, characterised in that the means of determining the slopes comprise means (12) for determining the position of two image points belonging to the column (D) and having equal luminances at predetermined fractions of the said maximum luminance.

6. Device according to Claim 4 or 5, characterised in that the processing means (12) comprise means for comparing the two determined slopes with reference slopes.

7. Device according to one of Claims 1 to 6, characterised in that the camera (10) is situated in a roof fitting (PF) of the vehicle.

## Patentansprüche

1. Vorrichtung zur automatischen Einstellung der Scheinwerfer (P) eines Kraftfahrzeugs (V) in Abhängigkeit von den Neigungsveränderungen der Fahrzeugkarosserie , **dadurch gekennzeichnet**, daß sie die folgenden Bestandteile umfaßt:
- eine Videokamera (10), die auf den Bereich vor dem Fahrzeug ausgerichtet ist und in deren Sichtfeld die Scheinwerfer (P) des Fahrzeugs die Fahrbahn beleuchten und die Bildsignale liefert, die Informationen zur Rückstreuung des Scheinwerferlichts durch die Fahrbahn enthalten,
- Verarbeitungsmittel (12), die die besagten Bildsignale empfangen und die anhand der besagten Informationen und von gespeicherten Referenzinformationen die Veränderungen der Ausrichtung der von den Scheinwerfern abgestrahlten Lichtbündel im Verhältnis zu einer Referenzausrichtung bestimmen und Steuersignale an Stellglieder (14) übertragen können, um die Ausrichtung der besagten Lichtbündel auf die besagte Referenzausrichtung einzustellen.

2. Vorrichtung nach Anspruch 1 , **dadurch gekennzeichnet,** daß die besagten Verarbeitungsmittel (12) eine Mehrzahl von Lichtpunkten (A, B, C) ein und derselben Spalte (D) des Videobilds (I) berücksichtigen.

3. Vorrichtung nach Anspruch 2 , **dadurch gekennzeichnet,** daß die besagte Spalte (D) im mittleren Bereich des Videobilds angeordnet ist.

4. Vorrichtung nach einem der Ansprüche 2 und 3, **dadurch gekennzeichnet,** daß die Verarbeitungsmittel (12) die jeweiligen Steigungen zweier Geraden (AB, BC) ermitteln können, die beiderseits eines Punkts (B) mit maximaler Leuchtdichte angeordnet und repräsentativ für die Entwicklung der Leuchtdichte der Punkte entlang der Spalte (D) oberhalb bzw. unterhalb des besagten Punkts mit maximaler Leuchtdichte sind.

5. Vorrichtung nach Anspruch 4 , **dadurch gekennzeichnet,** daß die Mittel zur Ermittlung der Steigungen Mittel (12) umfassen, um die Position von zwei Bildpunkten zu bestimmen, die zu der Spalte (D) gehören und die Leuchtdichten aufweisen, die gleich vorgegebenen Bruchteilen der besagten maximalen Leuchtdichte sind.

6. Vorrichtung nach Anspruch 4 oder 5 , **dadurch gekennzeichnet,** daß die Verarbeitungsmittel (12) Mittel zum Vergleich der beiden ermittelten Steigungen mit Referenzsteigungen umfassen.

7. Vorrichtung nach einem der Ansprüche 2 bis 6, **dadurch gekennzeichnet,** daß die Kamera (10) in einer Deckenleuchte (PF) des Fahrzeugs angeordnet ist.
